# EUROPÄISCHE PATENTSCHRIFT

(11) **EP 3 344 876 B1**
(45) Veröffentlichungstag und Bekanntmachung des Hinweises auf die Patenterteilung: **30.10.2019**
(21) Anmeldenummer: 16757006.8
(22) Anmeldetag: 22.08.2016
(51) Int. Cl.: F04D 13/06, F01P 5/12, F04D 29/02, F04D 29/42, F04D 29/58, H02K 11/33

(54) **ELEKTRISCHE KÜHLMITTELPUMPE MIT STRÖMUNGSGEKÜHLTER STEUERSCHALTUNG**
ELECTRIC COOLANT PUMP HAVING A FLOW-COOLED CONTROL CIRCUIT
POMPE À RÉFRIGÉRANT ÉLECTRIQUE COMPRENANT UN CIRCUIT DE COMMANDE À REFROIDISSEMENT HYDRAULIQUE

(30) Priorität: 03.09.2015 DE 102015114783
(43) Veröffentlichungstag der Anmeldung: 11.07.2018
(73) Patentinhaber: NIDEC GPM GmbH, 98673 Auengrund /OT Merbelsrod (DE)
(72) Erfinder: PAWELLEK, Franz, 96486 Lautertal (DE); HOFFMANN, Jens, 98673 Schwarzbach (DE); BÄTZ, Christian, 96515 Sonneberg (DE)
(74) Vertreter: Kuhnen & Wacker Patent- und Rechtsanwaltsbüro PartG mbB
(86) Internationale Anmeldenummer: PCT/EP2016/069795
(87) Internationale Veröffentlichungsnummer: WO 2017/036837

(56) Entgegenhaltungen:
- EP-A1- 1 635 069
- EP-A1- 2 607 709
- JP-A- 2004 316 548

## Beschreibung

Die vorliegende Erfindung betrifft eine elektrische Kühlmittelpumpe mit einer Steuerschaltung, die durch den Förderstrom gekühlt wird.

Um die Verbrennungsmaschine für eine effiziente Verbrennung und geringe Abgasemission in einem optimalen Temperaturbereich zu halten, wird der Wärmeaustrag des Kühlsystems in Abhängigkeit des aktuellen Betriebszustands gesteuert. In automobilen Anwendungen werden daher zunehmend elektrische Kühlmittelpumpen eingesetzt, die unabhängig von der Drehzahl eines Verbrennungsmotors angetrieben werden können und eine höhere Flexibilität bei der Steuerung eines Kühlmittelkreislaufs in Reaktion auf verschiedene Betriebsparameter des Verbrennungsmotors oder Umgebungseinflüsse ermöglichen. So sieht beispielsweise ein Thermomanagement eines Verbrennungsmotors vor, während einer Kaltstartphase den Wärmeaustrag zunächst ganz und darauffolgend teilweise zu unterbinden.

Eine Problemstellung beim Einsatz elektrischer Kühlmittelpumpen stellt die ausreichende Kühlung der Steuerungselektronik innerhalb der Kühlmittelpumpe dar, die einen wesentlichen Faktor für die Lebensdauer der Kühlmittelpumpe und ebenso für die Betriebssicherheit des Verbrennungsmotors sowie der Zuverlässigkeit des angetriebenen Fahrzeugs darstellt. Die Kühlmitteltemperatur kann unter kritischen Umständen sehr nahe an die zulässige Höchsttemperatur der elektronischen Bauteile der Steuerschaltung des Elektromotors der Pumpe heranreichen, sodass bei zusätzlicher Abwärme des elektrischen Pumpenmotors selbst ein Versagen der Steuerschaltung durch Überhitzung droht.

Bei der Verwendung eines Elektromotors als Pumpenmotor ist dieser in der Regel mit der Steuerungselektronik gemeinsam gekapselt als Motorbaugruppe verbaut, um selbigen vor äußeren korrosiven Einflüssen und Verschmutzungen im Betrieb zu schützen. Durch die gemeinsame Kapselung des Elektromotors und der Elektronik als Motorbaugruppe, kann die eigene Abwärme des Elektromotors, die mit dessen Verlustleistung einhergeht, jedoch nicht wie in anderen Anwendungen durch einen Luftstrom abgeführt werden. Somit fließt die Abwärme des Elektromotors unmittelbar als Wärmeeintrag in die elektronischen Bauteile der Steuerschaltung der Kühlmittelpumpe ein.

Bei einem geeigneten elektrischen Pumpenmotor beträgt die Verlustleistung rund 20% der elektrischen Leistung, so dass bei einem Pumpenmotor mit 500 W, wie er beispielsweise in einer Kühlmittelpumpe eines Kühlmittelkreislaufs in einem PKW eingesetzt wird, im Vollastbetrieb ein Wärmeeintrag von 100 W entsteht, der von der Kühlmittelpumpe zusätzlich über die Abwärme des Kühlmittels hinaus aufgenommen wird. Die Komponenten des Elektromotors erreichen Temperaturen oberhalb von 200 °C.

Im Stand der Technik sind Kühlmittelpumpen bekannt, die zur Einhaltung der zulässigen Betriebstemperatur der elektronischen Bauteile einen Wärmeaustausch zu dem Kühlmittel des Verbrennungsmotors nutzen. Das Kühlmittel weist einen vielfach höheren Wärmeleitkoeffizienten von etwa 0,441 W/mK gegenüber Luft mit 0,0262W/mK auf. Zudem hält es im Betrieb des Kühlmittelkreislaufs einen definierten Temperaturbereich ein, wohingegen die Temperatur der Luft in Abhängigkeit von der Umgebung, insbesondere des Verbrennungsmotors, und ggf. einer Bewegungsgeschwindigkeit stark variiert.

Die US 6 082 974 B1 beschreibt eine Motorpumpe mit einer Kammer, die zu einem Einlass und einem Auslass der Pumpe benachbart angeordnet ist, und dazu vorgesehen ist, einen Controller aufzunehmen.

Allerdings ist zu beachten, dass bei der Anwendung einer Pumpe als Kühlmittelpumpe eines Verbrennungsmotors das Kühlmittel im Betrieb des Verbrennungsmotors eine hohe Temperatur aufnimmt und somit bereits selbst einen hohen Wärmeeintrag in die Kühlmittelpumpe einbringt.

Nach dem Durchlaufen des Kühlers bzw. eines Wärmetauschers mit der Umgebung sollte das Kühlmittel nach Auslegung von Standards der Automobilbranche noch eine maximale Temperatur von bis zu 113 °C aufweisen. In Anwendungen mit besonderer Beanspruchung, extremen Umgebungstemperaturen, oder in ungünstigen Fällen kann das Kühlmittel in einem Kühlmittelkreislaufs eines Verbrennungsmotors in einem Fahrzeug jedoch beispielsweise eine Temperatur von 120 °C oder sogar 130 °C erreichen.

Somit steht eine geringe Temperaturdifferenz von nur wenigen Grad zwischen der Kühlmitteltemperatur und der zulässigen Betriebstemperatur der elektronischen Bauteile zur Verfügung. Um eine zuverlässige Funktion der elektronischen Bauteilen in der Kühlmittelpumpe auch unter kritischen Bedingungen hinsichtlich des Betriebszustands des Verbrennungsmotors oder der Außentemperatur sicherzustellen, besteht eine technische Anforderung, trotz der geringen nutzbaren Temperaturdifferenz einen effizienten Wärmetransport zwischen den elektronischen Bauteilen und dem Kühlmittel herzustellen.

Zudem ist die Kühlmittelpumpe üblicherweise platzsparend in unmittelbarer Nähe zu dem Verbrennungsmotor installiert. Demzufolge ist die Kühlmittelpumpe durch die Abwärme des Verbrennungsmotors einer Aufheizung mit nochmals erheblich höheren Umgebungstemperatur ausgesetzt.

Die DE 11 2013 003 549 T5 beschreibt eine Kühlmittelpumpe für automobile Anwendungen mit einer Donut-förmigen Steuerschaltung, die auf axialer Höhe des Flügelrads an eine Radialpumpenkammer grenzt. Die Pumpe ist mit einem Nassläufermotor ausgestattet und ist durch eine Nassbüchse von der Pumpenkammer getrennt. Allerdings ist die Donut-förmige Steuerschaltung mit dem Stator des Nassläufers gemeinsam eingehaust und ist folglich dessen Abwärme ausgesetzt.

Die EP 2 607 709 A1 offenbart einen elektrischen Antriebsmotor, insbesondere für ein Pumpenaggregat. Ein Klemmenkasten bzw. ein Elektronikgehäuse für elektrische und/oder elektronische Bauelemente zur Steuerung des elektrischen Antriebsmotors ist an dem elektrischen Antriebsmotor angeordnet und wird in seiner geometrischen Grundform aus mehreren Abschnitten gebildet, welche gemeinsam die Gesamtgestalt bzw. Gesamtform des Klemmenkastens bilden.

Die EP 1 635 069 A1 offenbart eine Pumpenanordnung mit einem Elektromotor und einem elektrischen oder elektronischen Motorsteuerungsbauteil, das derart angebracht ist, dass sich eine Hauptoberfläche desselben parallel zu einer Drehachse des Elektromotors erstreckt.

Die JP 2004 316548 A zeigt eine Flüssigkeitspumpe mit einer strömungsgekühlten Steuerschaltung und einer geringen axialen Bauhöhe. Die Steuerschaltung ist außen am Pumpengehäuse um den Einlass der Pumpe herum auf der gegenüberliegenden Seite des Motors angeordnet.

Es ist eine Aufgabe der vorliegenden Erfindung, eine elektrische Kühlmittelpumpe zu schaffen, die eine effektive Kühlung der Steuerschaltung des elektrischen Pumpenantriebs durch den Kühlmittelkreislauf eines Verbrennungsmotors sicherstellt.

Die Aufgabe wird erfindungsgemäß durch eine elektrische Kühlmittelpumpe nach dem Anspruch 1 gelöst. Diese zeichnet sich insbesondere dadurch aus, dass die geöffnete Seite der Pumpenkammer und die geöffnete Seite der ECU-Kammer durch einen Wärmeaustauschdeckel abgetrennt sind, der an einer Einmündung eines Einlasses in die Pumpenkammer geöffnet ist; wobei ein Material, aus dem die ECU-Kammer ausgebildet ist, eine geringere Wärmeleitfähigkeit als ein Material aufweist, aus dem der Wärmeaustauschdeckel und der Spiralgehäuseabschnitt ausgebildet ist.

Die Erfindung sieht somit erstmals vor, eine Steuerschaltung, die auf der Seite des Pumpengehäuses, die dem elektrischen Motor gegenüberliegt und um den Einlass herum angeordnet ist, durch einen Wärmeaustauschdeckel von der konvektionsreichen Förderströmung in der Pumpenkammer zu trennen.

Ferner sieht die Erfindung vor, dass die Steuerschaltung einerseits von dem Förderstrom gekühlt wird, und andererseits gegenüber den nochmals höheren Umgebungstemperaturen in unmittelbarer Nähe zum Verbrennungsmotor isoliert ist.

Durch die erhöhte Wärmeleitfähigkeit des Materials des Wärmeaustauschdeckels wird ein besserer Wärmeaustausch zwischen dem Förderstrom des Kühlmittels und der Steuerschaltung hergestellt. Die eng benachbarte Anordnung des Wärmeaustauschdeckels und der Steuerschaltung zu dem Impeller stellt zudem eine Wärmbrücke mit kurzer Strecke des Temperaturgradienten bereit.

Die Steuerschaltung ist separat angeordnet und nimmt keine Abwärme von dem Elektromotor auf. Im Gegensatz zum genannten Stand der Technik, bringt die erfindungsgemäße Kühlmittelpumpe ferner Vorteile zur erleichterten Montage derselben mit sich. Durch eine offen gestaltete Pumpenkammer sind der Elektromotor einerseits und insbesondere der Impeller andererseits zur Montage frei zugänglich. Beim Fixieren des Wärmeaustauschdeckels über dem Impeller kann ein dazwischenliegendes Spaltmaß präziser eingestellt werden.

Durch die Anordnung der Steuerschaltung um den Einlass der Kühlmittelpumpe herum wird ferner eine kleinere axiale Abmessung als bei einer Anordnung derselben an einer Außenseite des Elektromotors realisiert. Dieser Aspekt ist in automobilen Anwendungen, bei denen durch die zunehmende Anzahl an Hilfsaggregaten in einem Motorraum eine erhöhte Einschränkung des Bauraums vorherrscht, ein nicht unerheblicher Vorteil.

Andere vorteilhafte Weiterbildungen der erfindungsgemäßen elektrischen Kühlmittelpumpe sind Gegenstand der abhängigen Ansprüche.

In einer vorteilhaften Ausführungsform kann der Wärmeaustauschdeckel aus Aluminium oder einer Aluminiumlegierung bestehen. Aluminium zeichnet sich durch eine gute Wärmeleitfähigkeit aus und weist gleichzeitig einen ausreichenden Schutz vor Korrosion auf.

In einer vorteilhaften Ausführungsform kann die ECU-Kammer in einem Formteil aus Kunststoff ausgebildet sein. Durch eine Umwandung aus einem Kunststoff mit geringer Wärmeleitfähigkeit kann die Steuerschaltung in fertigungsgünstiger Weise von den heißen Umgebungstemperaturen am Verbrennungsmotor isoliert und vor Feuchtigkeit und Schmutz abgegrenzt werden.

In einer bevorzugten Ausführungsform kann der Spiralgehäuseabschnitt aus Aluminium oder einer Aluminiumlegierung bestehen, die für ein Druckgussverfahren, ein Spritzgussverfahren oder ein 3D-Druckverfahren fertigungstechnisch geeignet sein. Eine Druckgusslegierung erleichtert die Fertigung der charakteristischen Form des Spiralgehäuses. Ferner begünstigt die Wärmeleitfähigkeit des Materials im Bereich des Pumpengehäuses eine Temperaturaufnahme an den Schnittstellen zur Motorbaugruppe und der ECU-Kammer sowie eine Einleitung der aufgenommenen Temperatur in den darin zirkulierenden Förderstrom.

In einer bevorzugten Ausführungsform kann eine unbestückte Seite eines Schaltungsträgers der Steuerungsschaltung mit dem Wärmeaustauschdeckel flächig in Kontakt stehen. Hierdurch wird eine größtmögliche Wärmeaustauschfläche zwischen der Steuerschaltung und dem Förderstrom des Kühlmittels bereitgestellt.

In einer bevorzugten Ausführungsform kann der Schaltungsträger der Steuerschaltung ein Stanzgitter sein. Die Verwendung eines Stanzgitters anstelle einer Leiterplatte ermöglicht ohne Vergussmasse, Hohlräume, internen Steck-, Quetsch- oder Klemmverbindungen einen verbesserten Wärmeübergang der elektronischen Bauteile auf den Wärmeaustauschdeckel.

In einer weiteren Ausführungsform kann die Steuerschaltung eine gedruckte Leiterplatte aufweisen, die vorzugsweise in der ECU-Kammer mittels elektrisch verbindender Kontaktstifte von dem Schaltungsträger beabstandet gehalten ist. Insofern die Steuerschaltung für den Bestandteil einer logischen Schaltung eine gedruckte Leiterplatte aufweist, kann durch eine mittels Kontaktstifte beabstandete Anordnung der Leiterplatte im Raum, eine Abschirmung der übrigen Bauelemente zu der Wärmeaustauschfläche des Wärmeaustauschdeckels umgangen werden.

In einer bevorzugten Ausführungsform kann das Pumpenlaufrad als Impeller mit einer zentralen Anströmungsöffnung und radialen Austrittsöffnungen ausgebildet sein, und zwischen der Anströmungsöffnung und den radialen Austrittsöffnungen in radialer und axialer Richtung ausgeprägte Stufen aufweisen. Zudem kann der Wärmeaustauschdeckel radial alternierende Vorsprünge und Ausnehmungen aufweisen, wobei ein Vorsprung und eine benachbarte Ausnehmung jeweils einer Stufe des axial gegenüberliegenden Pumpenlaufrads radial zugeordnet sind, und axiale Ausprägungen der Vorsprünge zu den zugeordneten Stufen komplementär abgestuft sind, sodass zwischen den zugeordneten Vorsprüngen und Stufen ein Spaltmaß gebildet wird.

Durch die komplementäre Abstufung in Verbindung mit den ringförmigen Ausnehmungen wird eine Labyrinthdichtung zwischen dem Impeller und der Mündung des Einlasses in den Wärmeaustauschdeckel hergestellt. Ein Leckagestrom, der sich radial außerhalb an der Stirnseite des Impellers aus dem anströmenden Förderstrom abzweigt, wird bei einer Umgehung des Impellers durch radial alternierende Druckzonen beim Durchlaufen der Spaltmaße an den Vorsprüngen und der kapillar wirkenden benachbarten Ausnehmungen abgebremst. Ebenso wirkt die Labyrinthdichtung einem Druck des beschleunigten Kühlmittels in dem Spiralgehäuse entgegen, sodass sich kein Rückstrom am Impeller vorbei bildet, der die Anströmung beinträchtigen würde.

Durch die Labyrinthdichtung wird einerseits der volumetrische Wirkungsgrad der Pumpe verbessert. Andererseits verbessert die Labyrinthdichtung in einem Bereich, in dem der Wärmeaustauschdeckel in intensivem Kontakt mit dem Kühlmittel steht, einen Wärmeübergang durch die vergrößerte Oberfläche entlang der Vorsprünge und Ausnehmungen.

In einer bevorzugten Ausführungsform kann der Wärmeaustauschdeckel einen Kragen aufweisen, der den Einlass umschließt und/oder die Einmündung des Einlasses bildet. Somit kann eine indirekte und / oder direkte Kontaktfläche zum Wärmeaustausch mit dem Kühlmittel vergrößert werden. Ferner ermöglicht der Kragen die Aufnahme eines separat gefertigten Einlasses.

In einer bevorzugten Ausführungsform können die ECU-Kammer und der Einlass einteilig ausgebildet sein. Hierdurch können die Anzahl der gefertigten Bauteile und der Montageaufwand verringert werden.

In einer bevorzugten Ausführungsform kann die elektrische Kühlmittelpumpe eine Busschiene aufweisen, die sich durch einen Kanal im Pumpengehäuse erstreckt und eine elektrische Verbindung zwischen der Steuerschaltung und einem Stator des elektrischen Motors herstellt. Durch die Busschiene wird bei der Montage der Pumpe das Einführen des Pumpengehäuses an der Motorbaugruppe, und insbesondere das Durchführen der Motorzuleitungen zur gegenüberliegenden Seite des Pumpengehäuses, erleichtert.

In einer bevorzugten Ausführungsform kann zwischen einem Innenflächenabschnitt des Kanals und einem Außenflächenabschnitt der Busschiene ein Freiraum verbleiben, der einen Druckausgleich zwischen einem Innenraum eines Motorgehäuse und der ECU-Kammer ermöglicht. Somit kann die Motorbaugruppe gegenüber äußeren Witterungseinflüssen abgedichtet werden, und ein Überdruck bei deren Erwärmung kann zur kühleren ECU-Kammer hin ausgeglichen werden.

In einer bevorzugten Ausführungsform kann die ECU-Kammer eine Öffnung aufweisen, die durch eine flüssigkeitsdichte und gasoffene Membran verschlossen ist. Somit kann ein Überdruck, der insbesondere aus dem Druckausgleich der erhitzen Motorbaugruppe resultieren kann, in der ECU-Kammer abgebaut werden, ohne dass bei einem späteren Abkühlen Feuchtigkeit eingetragen wird.

In einer bevorzugten Ausführungsform kann die elektrische Kühlmittelpumpe eine Metalldichtung zwischen dem Pumpengehäuse und dem Wärmeaustauschdeckel aufweisen. Eine Metalldichtung weist eine montagetechnisch geeignete Elastizität auf, die beim Anziehen des Wärmeaustauschdeckels mittels Flanschschrauben, die an dessen Umfang verteilt sind, eine präzise Einstellung des Spaltmaßes zwischen dem Wärmeaustauschdeckel und dem Impeller im Bereich der Labyrinthdichtung ermöglicht.

In einer bevorzugten Ausführungsform kann die elektrische Kühlmittelpumpe eine Lippendichtung zwischen dem Pumpengehäuse und der Pumpenwelle aufweisen. Die Lippendichtung ermöglicht eine ausreichende Abdichtung der Pumpenkammer unterhalb des Impellers gegenüber der Lagerung der Pumpenwelle am Pumpengehäuse. Darüber hinaus zeichnet sich eine Lippendichtung durch ein geringeres Reibmoment aus, als dies bei einer üblicherweise verwendeten mechanischen Dichtung für Wasserpumpen, d.h. eine durch Federvorspannung beaufschlagte Gleitringdichtung, der Fall ist.

In einer bevorzugten Ausführungsform kann die elektrische Kühlmittelpumpe eine Aluminium-Leckagedichtung zwischen dem Pumpengehäuse und dem elektrischen Motor aufweisen. Dadurch braucht das Gehäuse der Motorbaugruppe nicht gekapselt bzw. geschlossen sein, und eine Wand zum Abschluss der Motorbaugruppe kann entfallen. Die Aluminium-Leckagedichtung, die vor der Montage des elektrischen Motors an dem Pumpengehäuses eingefügt wird, schließt die geöffnete Seite zu den Motorkomponenten gegen ein mögliches Austreten von Kühlmittel aus dem Pumpengehäuse ab. Ferner fördert die Wärmeleitfähigkeit des Dichtungsmaterials an der Schnittstelle des Pumpengehäuses den Wärmeübergang der Motorbaugruppe auf den Spiralgehäuseabschnitt, der vorzugsweise aus Aluminium-Druckguss gefertigt ist, und die Wärme weiter in den Förderstrom einleitet.

In einer bevorzugten Ausführungsform kann ein Motorgehäuse, mittels dem der elektrische Motor an dem Pumpengehäuse befestigt ist, aus Aluminium bestehen. Die Wärmeleitfähigkeit des Motorgehäuses fördert wiederum den Wärmeaustrag von der Motorgruppe auf das Pumpengehäuse.

In einer bevorzugten Ausführungsform kann zwischen einer Stirnseite des elektrischen Motors und einer gegenüberliegenden Kontur des Spiralgehäuseabschnitts im Pumpengehäuse eine Leckagekammer ausgebildet sein. Die Leckagekammer bildet einen Hohlraum, der durch die Leckagedichtung von der geöffneten Seite der Motorbaugruppe getrennt ist. Die Leckagekammer kann gemeinsam mit der Leckagedichtung eine aufschiebende, entfeuchtende Wirkung erzielen, wenn Aufgrund eines Verschleißes der Lippendichtung eine geringe Leckage in Form von Tropfen des Kühlmittels in die Motorbaugruppe eintreten sollte.

Die Erfindung wird nachfolgend durch Ausführungsbeispiele anhand der begleitenden Figuren näher erläutert. Es zeigt:
- Fig. 1: eine Querschnittansicht einer Ausführungsform der elektrischen Kühlmittelpumpe;
- Fig. 2: eine perspektivische Ansicht der elektrischen Kühlmittelpumpe aus Fig. 1;
- Fig. 3: eine perspektivische Explosionsansicht der elektrischen Kühlmittelpumpe aus Fig. 1;
- Fig. 4: eine perspektivische Ansicht des Spiralgehäuseabschnittes und der abgestuften Kontur des Impellers;
- Fig. 5: eine perspektivische Ansicht der Steuerschaltung auf dem Wärmeaustauschdeckel der elektrischen Kühlmittelpumpe;
- Fig. 6: eine perspektivische Ansicht der abgedichteten Motorbaugruppe mit Wellenlagerung;
- Fig. 7: eine perspektivische Ansicht der geöffneten Motorbaugruppe;
- Fig. 8: eine Schnittansicht der ECU-Kammer mit Membranöffnung.

Nachfolgend wird der Aufbau einer beispielhaften Ausführungsform der erfindungsgemäßen elektrischen Kühlmittelpumpe in Bezug auf die Zeichnungen beschrieben.

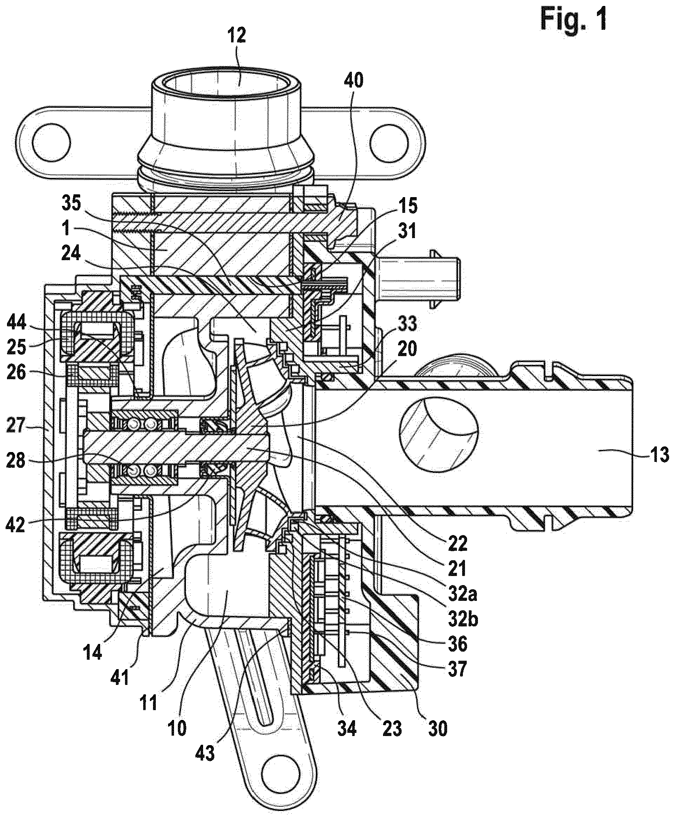

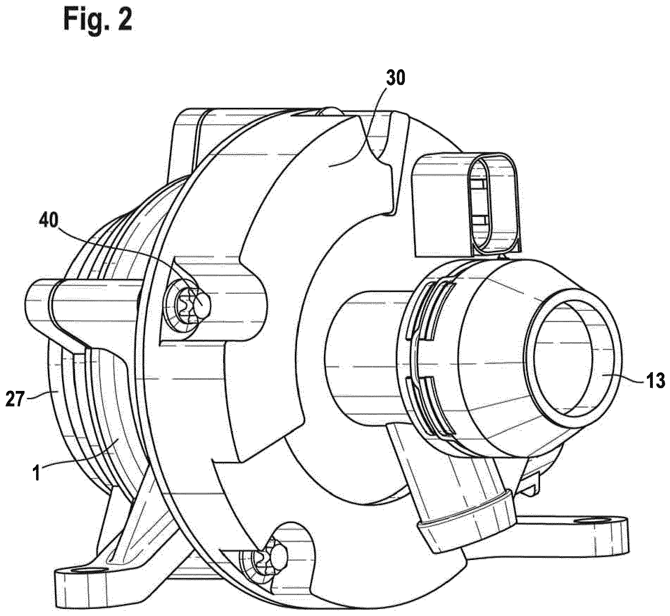

Wie den Figuren 1 und 2 zu entnehmen ist, setzt sich die Kühlmittelpumpe in axialer Richtung der Pumpe im Wesentlichen aus drei Abschnitten, nämlich der Baugruppe des Elektromotors 2, dem Pumpengehäuse 1 und der Steuerschaltung 3 bzw. der ECU-Kammer 30 mit einem integrierten Einlass 13 zusammen. Die Abschnitte werden bei der Montage der Pumpe durch Schraubenbolzen 40 verbunden, die in axialer Richtung eingesteckt werden.

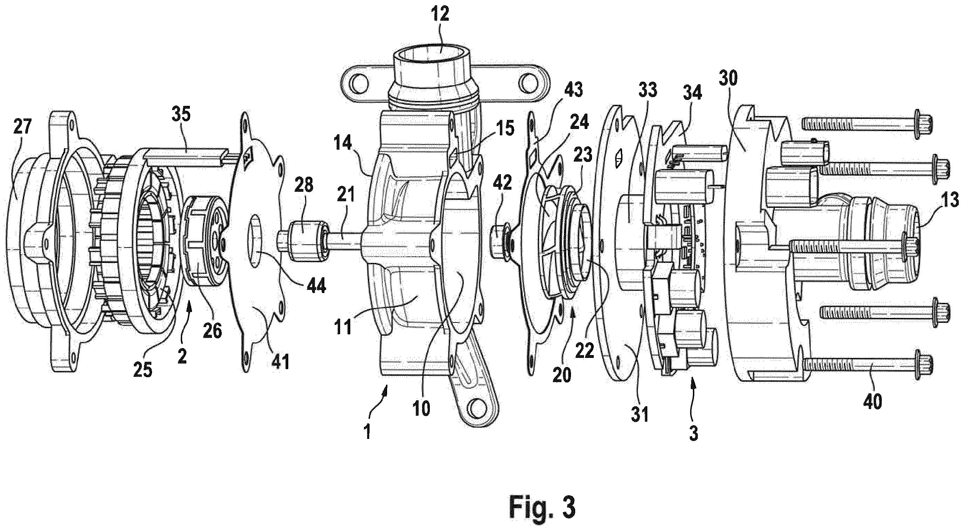

Eine separierte Ansicht der einzelnen Bauteile der beschriebenen Ausführungsform ist in Fig. 3 dargestellt.

An einer Seite des Pumpengehäuses 1 ist ein Elektromotor 2 mit einem Stator 25 und einem Rotor 26 angebracht. Der Elektromotor 2 ist von einem Motorgehäuse 27 umschlossen, das mittels der Schraubenbolzen 40 an das Pumpengehäuse 1 angeflanscht wird. Das Motorgehäuse 27 ist an der Stirnseite, die dem Pumpengehäuse 1 zugewiesen ist, geöffnet. Zwischen der Motorbaugruppe und dem Pumpengehäuse ist eine Leckagedichtung 41 eingefügt.

An dem Stator 25 des Elektromotors 2 erstreckt sich vom äußeren Umfang desselben in axialer Richtung der Pumpe eine Busschiene 35. Die Busschiene 35 führt in sich Zuleitungen des Elektromotors 2 zur Erregung der Statorspulen des Stators 25, die von einer Leistungselektronik angesteuert werden. Das Pumpengehäuse 1 umfasst einen Kanal 15, in den die Busschiene 35 beim Anflanschen der Motorbaugruppe an das Pumpengehäuses 1 eingesteckt wird. Durch den Kanal 15 verläuft die Busschiene vor äußeren korrosiven Einflüssen geschützt im Inneren des Pumpengehäuses 1 und stellt auf der gegenüberliegenden Seite des Pumpengehäuses 1 entsprechende Zuleitungskontakte des Elektromotors 2 bereit.

Das Pumpengehäuse 1 umfasst seitens des Elektromotors 2 eine Aufnahme für ein Kugellager 28, an dem die Pumpenwelle 21 in einem Eintrittsbereich in das Pumpengehäuse 1 gegen dasselbe abgestützt und drehbar gelagert ist. Daran schließt sich in dem Pumpengehäuse 1 in axialer Richtung eine Pumpenkammer 10 an, in die sich das freie Ende der Pumpenwelle 21 hinein erstreckt. Auf dem freien Ende der Pumpenwelle 21 ist ein Radialpumpenlaufrad, nachstehend als Impeller 20 bezeichnet, fixiert, das in der Pumpenkammer 10 drehbar aufgenommen ist. Zwischen der Pumpenwelle 21 und deren Eintrittsöffnung in der Pumpenkammer 10 ist eine Lippendichtung 42 eingesetzt.

Der Impeller 20 ist ein radialbeschleunigendes Pumpenlaufrad mit einer zentralen Anströmungsöffnung 22, durch die der Förderstrom aus dem Einlass 13 der Kühlmittelpumpe angesaugt wird. Um die Anströmungsöffnung 22 herum erstreckt sich radial nach außen und axial strömungsabwärts ein Mantelabschnitt des Impellers 20. Weiter strömungsabwärts von dem Mantelabschnitt befinden sich kammerartige Austrittsöffnungen 24 des Impellers 20, die durch innenliegende Flügel abgetrennt sind, welche unterhalb der Anströmungsöffnung 22 beginnen und sich zu den Austrittsöffnungen 25 radial nach außen erstrecken.

Um den Impeller 20 herum wird die Pumpenkammer 10 durch einen, für eine Radialpumpe charakteristischen, Spiralgehäuseabschnitt 11 umschlossen. Der Spiralgehäuseabschnitt 11 nimmt den radial beschleunigten Förderstrom aus dem Impeller 20 auf und leitet diesen in einem umlaufenden Spiralkanal durch den Auslass 12 aus der Kühlmittelpumpe heraus. In der vorliegenden Ausführungsform ist der Spiralgehäuseabschnitt 11 ebenso wie der Auslass 12 und der übrige Teil des Pumpengehäuses 1 aus einer Druckgusslegierung hergestellt.

Die Pumpenkammer 10 ist auf der gegenüberliegenden Seite des Elektromotors 2 geöffnet. Zwischen der geöffneten Seite und dem Einlass 13 der Kühlmittelpumpe ist die Pumpenkammer 10 durch einen Pumpendeckel abgeschlossen, der nachstehend auch als Wärmeaustauschdeckel 31 bezeichnet wird. Neben dem Stirnseitigen Abschluss der Pumpenkammer 10 stellt der Wärmeaustauschdeckel 31 an einer Öffnung strömungsaufwärts von dem Impeller 20 eine Mündungsaufnahme für den Einlass 13 bereit.

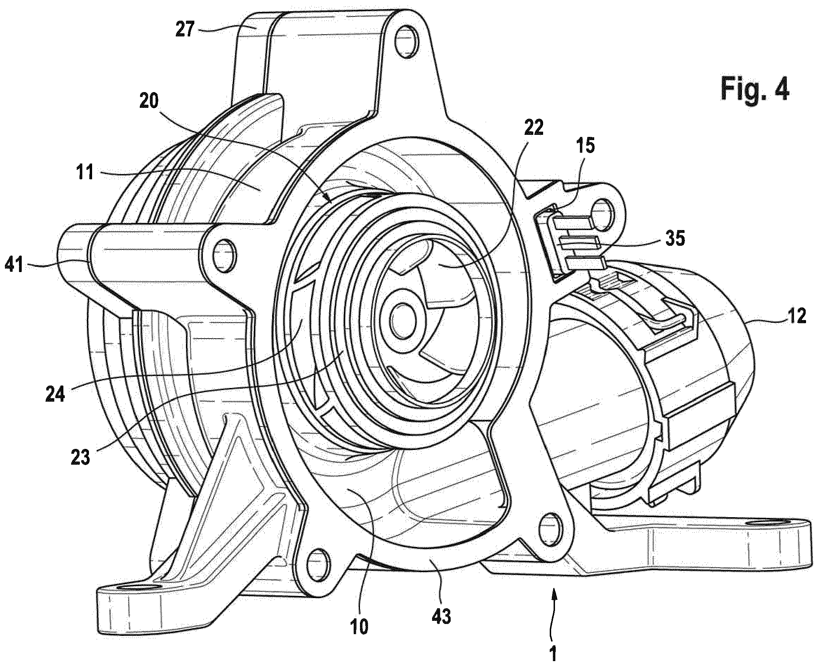

Zwischen dem Wärmeaustauschdeckel 31 und dem Impeller 20 ist an beiden Bauteilen eine stufenförmige Labyrinthdichtung vorgesehen, die eine Umgehung des Impellers durch den Förderstrom weitgehend unterbindet. Hierzu sind an dem Mantelabschnitt des Impellers 20 zwischen der Anströmungsöffnung 22 und den Austrittsöffnungen 24 stirnseitig radiale Stufen 23 ausgeprägt, wie in Fig. 4 gezeigt ist.

In dem gegenüberliegenden Mündungsbereich des Einlasses 13 sind komplementär zu den Stufen 23 des Impellers 20 radiale Vorsprünge 32a und Ausnehmungen 32b an dem Wärmeaustauschdeckel 31 eingearbeitet. Die Abstufung der axialen Erstreckung der Vorsprünge 32a entspricht der Abstufung der Stufen 23 des Impellers 20. Die Ausnehmungen 32b sind jeweils radial außerhalb benachbart zu jedem der Vorsprünge 32a in dem Wärmeaustauschdeckel 31 axial ausgenommen. Eine radiale Breite der Vorsprünge 32a, Ausnehmungen 32b und Stufen 23 ist derart aufeinander abgestimmt, das jeweils ein Vorsprung 32a und eine Ausnehmung 32b des Wärmeaustauschdeckels 31 einer Stufe 23 des Impellers 20 zugeordnet sind.

Wie in Fig. 1 gezeigt ist, ergeben sich an jeder Stufe 23 ein Spaltmaß und ein benachbarter Ringraum zwischen dem Impeller 20 und dem Wärmeaustauschdeckel 31. Ferner überdeckt ein innerer Radius der Mündungsöffnung des Wärmeaustauschdeckels 31 einen inneren Radius der Anströmungsöffnung 22 des Impellers 20. Somit wird weitestgehend verhindert, dass sich an der Anströmungsöffnung des Impellers 20 ein Teil des angesaugten Förderstroms entlang des Mantelabschnitts abspaltet und den Impeller 20 außerhalb umgeht, da beim Durchlaufen der beschriebenen Labyrinthdichtung alternierend ein Spalt und anschließend eine kapillar wirkende Ausnehmung mehrfach durchquert werden müssen.

Zugleich erhöht die Anzahl der Vorsprünge 32a und Ausnehmungen 32b die Oberfläche des Wärmeaustauschdeckels 31, die für einen Wärmeübergang zur Pumpenkammer 10 bereitsteht, und ein Füllung des Kühlmittels in den Ausnehmungen 32b unterliegt einem stetigen Austausch durch einen Leckagestrom. Ferner ist der Wärmeaustauschdeckel 31 in der vorliegenden Ausführungsform aus Aluminium gefräst. Weiterhin eignen sich für den Wärmeaustauschdeckel 31 Metalle mit einer guten Wärmeleitfähigkeit und Korrosionsbeständigkeit, wie z.B. Aluminium.

Zwischen dem Wärmeaustauschdeckel 31 und dem Pumpengehäuse 1 ist eine Metalldichtung 43 eingefügt. Durch eine geeignete Elastizität der Metalldichtung 43 wird bei der Montage des Wärmeaustauschdeckels 31 innerhalb eines definierten Anzugsmoments der Schraubenbolzen 40 eine Feinjustierung des Spaltmaßes der Labyrinthdichtung ermöglicht.

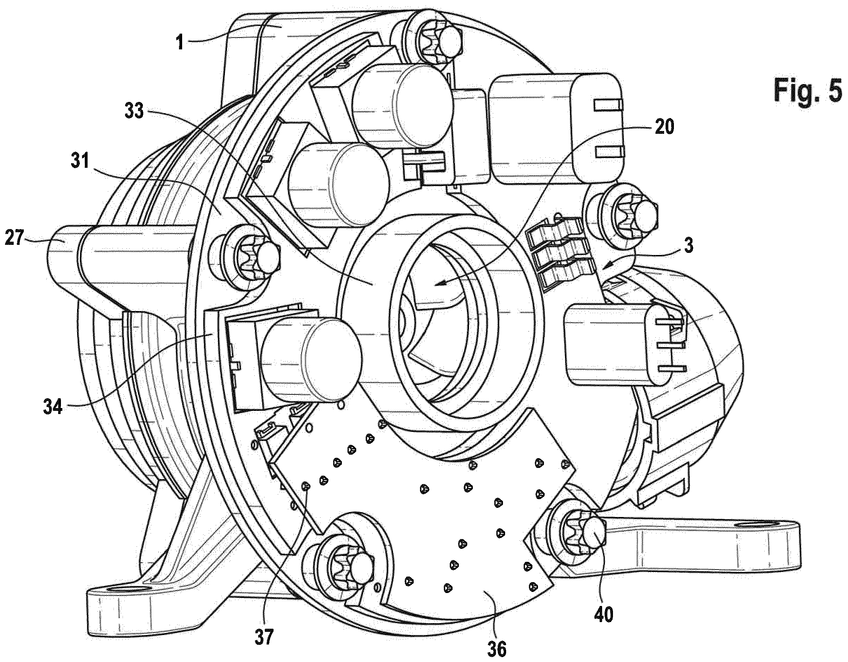

Wie in Fig. 5 gezeigt ist, ist die Steuerschaltung 3 direkt auf dem Wärmeaustauschdeckel 31 aufgebracht und beispielsweise durch eine Wärmeleitpaste fixiert. Anstelle einer herkömmlichen Leiterplatte oder einer eingegossenen Schaltung im genannten Stand der Technik, besteht in der vorliegenden Ausführungsform ein Träger der Steuerschaltung 3 aus einem Stanzgitter 34 mit einem metallischen Kern, der insbesondere die Wärmeübertragung der Leistungselektronik auf den Wärmeaustauschdeckel verbessert. Neben der Leistungselektronik umfasst die Steuerschaltung 3 eine logische Schaltung, die auf einer Leiterplatte 36 aufgedruckt ist. Die Leiterplatte 36 der logischen gedruckten Schaltung ist über Kontaktstifte 37 mit dem Stanzgitter 34 elektrisch verbunden und zu diesem beabstandet gehalten. Somit geht die radial Stirnfläche, die für die Leiterplatte 36 bereitzustellen ist, nicht an der Fläche des Stanzgitters verloren, das hinsichtlich der Wärmeleitfähigkeit der Leiterplatte überlegen ist.

Die Steuerschaltung 3 ist in der ECU-Kammer 30 aufgenommen, die den Wärmeaustauschdeckel 31 nach außen abschließt. In der dargestellten Ausführungsform ist die ECU-Kammer 30 einteilig mit dem Einlass 13 ausgebildet, wie in Fig. 2 gezeigt ist, und sie ist beispielsweise aus Kunststoff gefertigt.

Die Busschiene 35 erstreckt sich durch Öffnungen in dem Wärmeaustauschdeckel 31 und dem Stanzgitter 34. Kontakte, die den Zuleitungen des Elektromotors 2 zugeordnet sind, sind in montagegünstiger Weise durch Federkontakte mit der Leistungselektronik der Steuerschaltung 3 verbunden.

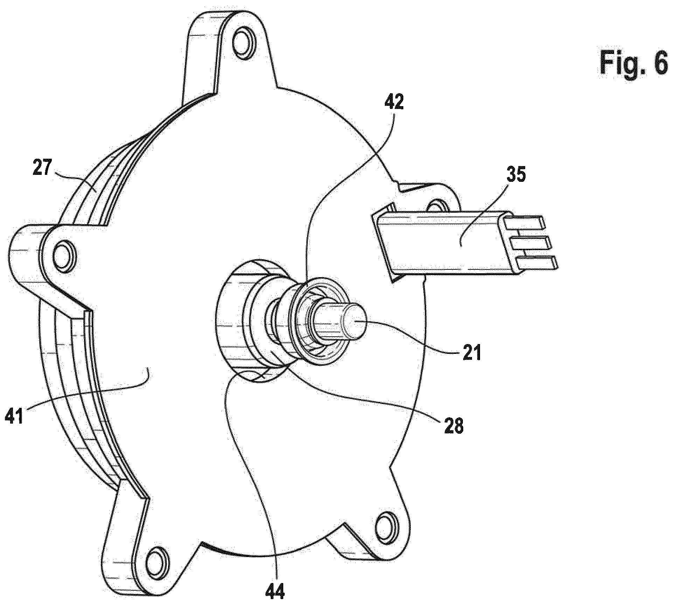

Wie in Fig. 6 gezeigt ist, ist die Motorbaugruppe durch eine Lippendichtung 42 und eine Aluminium-Leckagedichtung 41 abgedichtet. Die Lippendichtung 42 sitzt auf der Pumpenwelle 21 zwischen dem Kugellager 28 und der Pumpenkammer 10. Die Aluminium-Leckagedichtung 41 erstreckt sich in einer Ebene zwischen der Motorbaugruppe und dem Pumpengehäuse 1 und bildet im mittleren Bereich einen L-förmigen Kragen 44 aus, der die Aufnahme des Pumpengehäuses 1 für das Kugellager 28 radial umschließt und in Richtung der zum Elektromotor 2 hervorsteht.

Wenn im hohen Lastbetrieb der Pumpe oder nach zunehmendem Verschleiß der Lippendichtung 41 eine geringe Leckage an derselben auftritt, können Tropfen durch das Kugellager 28 der Pumpenwelle 21 an den Rotor 26 oder den Stator 25 des Elektromotors 2 gelangen. Die eingedrungenen Tropfen verdunsten in der Motorbaugruppe, insbesondere wenn sie mit den auf Betriebstemperatur befindlichen Komponenten in Kontakt geraten.

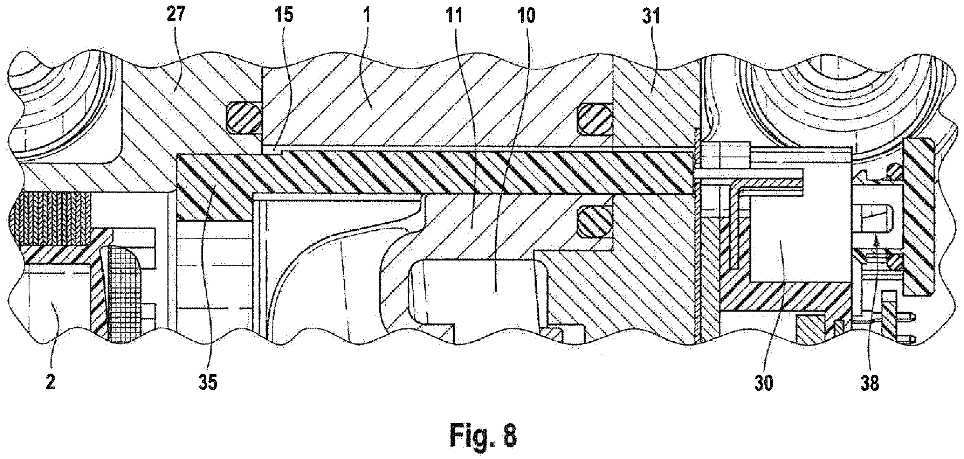

Da sich das Luftvolumen in der Motorbaugruppe im Betrieb stärker erwärmt als dasjenige in der ECU-Kammer 30 und somit der Druck beidseitig ungleich zunimmt, erfolgt durch den Kanal 15 ein Druckausgleich. Ein erhöhter Druck in der ECU-Kammer 30 kann durch die in Fig. 8 dargestellte Membran 38, die eine gasoffene jedoch flüssigkeitsdichte Membran 38 ist, welche eine Öffnung in der ECU-Kammer 30 abschließt, nach außen entweichen.

Wenn sich beim Abkühlen der Pumpe ein Unterdruck in der Motorbaugruppe einstellt, kann dieser wiederum in umgekehrter Reihenfolge durch die Membran 38 an der ECU-Kammer und über den Kanal 15 ausgeglichen werden, ohne dass Feuchtigkeit in die ECU-Kammer 30 eindringt.

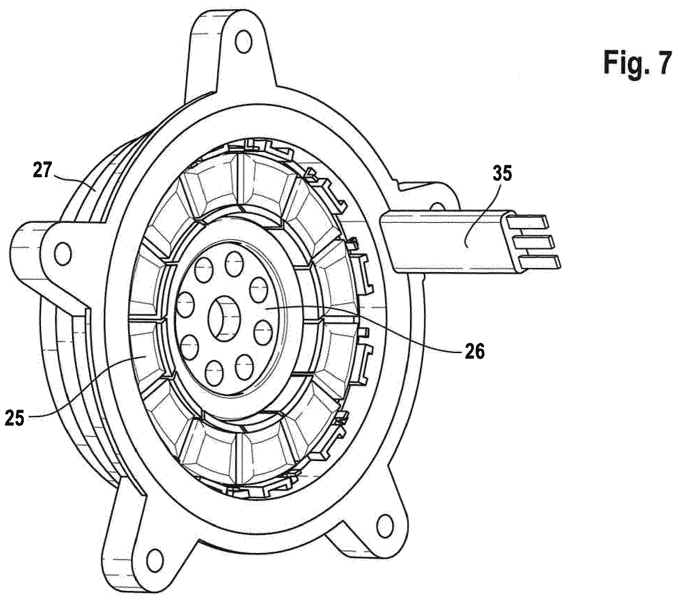

Wie in Fig. 7 dargestellt ist, ist in dieser Ausführungsform ein Elektromotor 2 vom Innenläufertyp eingesetzt. In einer alternativen Ausführungsform kann jedoch ebenso ein Elektromotor 2 vom Außenläufertyp verwendet werden, solange für den zentralen Stator seitens des Motorgehäuses 27 und dem Pumpengehäuse 1 eine Zuleitung vorgesehen wird, wie sie in der dargestellten Ausführungsform durch die Busschiene 35 eingerichtet ist.

Ferner können in einer alternativen Ausführungsform die ECU-Kammer 30 und der Einlass separat ausgebildet sein.

## Patentansprüche

1. Elektrische Kühlmittelpumpe, eingerichtet für einen Kühlmittelkreislauf eines Verbrennungsmotors, aufweisend:
einen elektrischen Motor (2) mit einer Pumpenwelle (21);
ein das zu fördernde Kühlmittel radial beschleunigendes Pumpenlaufrad (20), das auf der Pumpenwelle (21) angeordnet ist und von dem elektrischen Motor (2) angetrieben wird;
ein Pumpengehäuse (1) mit einer Pumpenkammer (10), in die sich die Pumpenwelle (20) drehbar gelagert erststreckt, und in der das Pumpenlaufrad (20) innerhalb eines Spiralgehäuseabschnitts (11) aufgenommen ist, der einen radialen Umfang der Pumpenkammer (10) umgibt;
einen Pumpeneinlass (13), welcher auf der Seite des Pumpengehäuses (1), die dem elektrischen Motor (2) gegenüberliegt, axial auf das Pumpenlaufrad (20) ausgerichtet, in die Pumpenkammer (10) mündet, sowie einen Auslass (12), der an einem Umfangsabschnitt des Spiralgehäuseabschnitts (11) tangential ausleitend ausgerichtet ist;
eine Steuerschaltung (3), die auf der Seite des Pumpengehäuses (1), die dem elektrischen Motor (2) gegenüberliegt, um den Einlass (13) herum angeordnet ist und in einer ECU-Kammer (30) aufgenommen ist; wobei
die Pumpenkammer (10) zu der Seite des Pumpengehäuses (1), die dem elektrischen Motor (2) gegenüberliegt, geöffnet ist, und die ECU-Kammer (30) zu der Seite, welche auf die Pumpenkammer (10) zuweist, geöffnet ist;
**dadurch gekennzeichnet, dass**
die geöffnete Seite der Pumpenkammer (10) und die geöffnete Seite der ECU-Kammer (30) durch einen Wärmeaustauschdeckel (31) abgetrennt sind, der an einer Einmündung des Einlasses (13) in die Pumpenkammer (10) geöffnet ist, wobei
ein Material, aus dem die ECU-Kammer (30) ausgebildet ist, eine geringere Wärmeleitfähigkeit als ein Material aufweist, aus dem der Wärmeaustauschdeckel (31) und der Spiralgehäuseabschnitt (11) ausgebildet ist.

2. Elektrische Kühlmittelpumpe nach Anspruch 1, wobei der Wärmeaustauschdeckel (31) aus Aluminium oder aus einer Aluminiumlegierung besteht.

3. Elektrische Kühlmittelpumpe nach Anspruch 1 oder 2, wobei die ECU-Kammer (30) in einem Formteil aus Kunststoff ausgebildet ist.

4. Elektrische Kühlmittelpumpe nach Anspruch 1 oder 3, wobei der Spiralgehäuseabschnitt (11) aus Aluminium oder einer Aluminiumlegierung besteht, die für ein Druckgussverfahren, Spritzgussverfahren oder 3D-Druckverfahren fertigungstechnisch geeignet ist.

5. Elektrische Kühlmittelpumpe nach einem der Ansprüche 1 bis 4, wobei eine unbestückte Seite eines Schaltungsträgers (34) der Steuerungsschaltung (3) mit dem Wärmeaustauschdeckel (31) flächig in Kontakt steht.

6. Elektrische Kühlmittelpumpe nach Anspruch 5, wobei der Schaltungsträger (34) der Steuerschaltung (3) ein Stanzgitter ist.

7. Elektrische Kühlmittelpumpe nach einem der Ansprüche 1 bis 6, wobei die Steuerschaltung (3) eine gedruckte Leiterplatte (36) aufweist, die vorzugsweise in der ECU-Kammer (30) mittels elektrisch verbindender Kontaktstifte (37) von dem Schaltungsträger (34) beabstandet gehalten ist.

8. Elektrische Kühlmittelpumpe nach einem der Ansprüche 1 bis 7, wobei
das Pumpenlaufrad (20) als Impeller mit einer zentralen Anströmungsöffnung (22) und radialen Austrittsöffnungen (24) ausgebildet ist, und an einem Mantelabschnitt zwischen der Anströmungsöffnung (22) und den radialen Austrittsöffnungen (24) Stufen (23) aufweist, die in radialer und axialer Richtung ausgeprägt sind; und
der Wärmeaustauschdeckel (31) radial alternierende Vorsprünge (32a) und Ausnehmungen (32b) aufweist, wobei ein Vorsprung (32a) und eine benachbarte Ausnehmung (32b) jeweils einer Stufe (23) des axial gegenüberliegenden Pumpenlaufrads (21) radial zugeordnet sind, und axiale Ausprägungen der Vorsprünge (32a) zu den zugeordneten Stufen (23) komplementär abgestuft sind, sodass zwischen den zugeordneten Vorsprüngen (32a) und Stufen (23) ein Spaltmaß gebildet wird.

9. Elektrische Kühlmittelpumpe nach einem der Ansprüche 1 bis 8, wobei der Wärmeaustauschdeckel (31) einen Kragen (33) aufweist, der den Einlass (13) umschließt und/oder die Einmündung des Einlasses (13) bildet.

10. Elektrische Kühlmittelpumpe nach einem der Ansprüche 1 bis 9, wobei die ECU-Kammer (30) und der Einlass (13) einteilig ausgebildet sind.

11. Elektrische Kühlmittelpumpe nach einem der Ansprüche 1 bis 10, ferner aufweisend eine Busschiene (35), die sich durch einen Kanal (15) im Pumpengehäuse (1) erstreckt und eine elektrische Verbindung zwischen der Steuerschaltung (3) und einem Stator (25) des elektrischen Motors (2) herstellt.

12. Elektrische Kühlmittelpumpe nach Anspruch 11, wobei zwischen einem Innenflächenabschnitt des Kanals (15) und einem Außenflächenabschnitt der Busschiene (35) ein Freiraum verbleibt, der einen Druckausgleich zwischen einem Innenraum eines Motorgehäuse (27) und der ECU-Kammer (30) ermöglicht.

13. Elektrische Kühlmittelpumpe nach einem der Ansprüche 1 bis 12, wobei die ECU-Kammer (30) eine Öffnung aufweist, die durch eine flüssigkeitsdichte und gasoffene Membran (38) verschlossen ist.

14. Elektrische Kühlmittelpumpe nach einem der Ansprüche 1 bis 13, ferner aufweisend eine Metalldichtung (43) zwischen dem Pumpengehäuse (1) und dem Wärmeaustauschdeckel (31).

15. Elektrische Kühlmittelpumpe nach einem der Ansprüche 1 bis 14, ferner aufweisend eine Lippendichtung (42) zwischen dem Pumpengehäuse (1) und der Pumpenwelle (21).

16. Elektrische Kühlmittelpumpe nach einem der Ansprüche 1 bis 15, ferner aufweisend eine Aluminium-Leckagedichtung (41) zwischen dem Pumpengehäuse (1) und dem elektrischen Motor (2).

17. Elektrische Kühlmittelpumpe nach einem der Ansprüche 1 bis 16, wobei ein Motorgehäuse (27), mittels dem der elektrische Motor (2) an dem Pumpengehäuse (1) befestigt ist, aus Aluminium besteht.

18. Elektrische Kühlmittelpumpe nach einem der Ansprüche 1 bis 17, wobei zwischen einer Stirnseite des elektrischen Motors (2) und einer gegenüberliegenden Kontur des Spiralgehäuseabschnitts (11) im Pumpengehäuse (1) eine Leckagekammer (14) ausgebildet ist.

## Claims

1. An electric coolant pump configured for a coolant circuit of an internal combustion engine, comprising:
an electric motor (2) with a pump shaft (21);
a pump impeller (20) which radially accelerates the coolant to be conveyed and which is arranged on the pump shaft (21) and is driven by the electric motor (2);
a pump housing (1) with a pump chamber (10) into which the rotably supported pump shaft (20) extends and in which the pump impeller (20) is accommodated within a spiral housing section (11) that encloses a radial circumference of the pump chamber (10);
a pump inlet (13) which, on the side of the pump housing (1) opposite the electric motor (2), leads into the pump chamber (10) and is axially directed to the pump impeller (20) as well as an outlet (12) which, at a circumferential section of the spiral housing section (11), is directed in a tangentially discharging direction;
a control circuit (3) which, on the side of the pump housing (1) opposing the electric motor (2), is situated around the inlet (13) and accommodated within an ECU chamber (30); wherein
the pump chamber (10) is opened to the side of the pump housing (1) opposing the electric motor (2) and the ECU chamber (30) is opened to the side facing the pump chamber (10);
**characterized in that**
the opened side of the pump chamber (10) and the opened side of the ECU chamber (30) are separated by a heat-exchange cover (31), which is opened at a mouth of the inlet (13) into the pump chamber (10), wherein
a material from which the ECU chamber (30) is made having a lower heat conductivity than a material from which the heat-exchange cover (31) and the spiral housing section (11) is made.

2. The electric coolant pump according to claim 1, wherein the heat-exchange cover (31) is made of aluminum or an aluminum alloy.

3. The electric coolant pump according to claim 1 or 2, wherein the ECU chamber (30) is formed in a molded piece of plastics.

4. The electric coolant pump according to claim 1 or 3, wherein the spiral housing section (11) is made of aluminum or an aluminum alloy that is suitable in terms of manufacturing for a pressure die casting process, an injection molding process or a 3D printing process.

5. The electric coolant pump according to one of claims 1 to 4, wherein an unpopulated side of a circuit carrier (34) of the control circuit (3) is in planar contact with the heat-exchange cover (31).

6. The electric coolant pump according to claim 5, wherein the circuit carrier (34) of the control circuit (3) is a lead frame.

7. The electric coolant pump according to one of claims 1 to 6, wherein the control circuit (3) comprises a printed circuit board (36) that is preferably held in the ECU chamber (30) spaced apart from the circuit carrier (34) by means of electrically connecting contact pins (37).

8. The electric coolant pump according to one of claims 1 to 7, wherein
the pump impeller (20) as the impeller is formed with a central inflow opening (22) and radial outlet openings (24) and comprises steps (23) formed at a casing portion between the inflow opening (22) and the radial outlet openings (24) in a radial and axial direction; and
the heat-exchange cover (31) comprises radially alternating protrusions (32a) and recesses (32b), wherein a protrusion (32a) and an adjacent recess (32b) being respectively radially associated with a step (23) of the pump impeller (21) being arranged axially on the opposite side, and axial shapes of the protrusions (32a) being graded to the associated steps (23) in a complementary manner so that a gap is formed between the associated recesses (32a) and the steps (23).

9. The electric coolant pump according to one of claims 1 to 8, wherein the heat-exchange cover (31) comprises a collar (33) that encloses the inlet (13) and/or forms the mouth of the inlet (13).

10. The electric coolant pump according to one of claims 1 to 9, wherein the ECU chamber (30) and the inlet (13) are formed integrally.

11. The electric coolant pump according to one of claims 1 to 10, further comprising a busbar rail (35) which extends through a channel (15) in the pump housing (1) and establishes an electric connection between the control circuit (3) and a stator (25) of the electric motor (2).

12. The electric coolant pump according to claim 11, wherein a clearance remains between an internal surface section of the channel (15) and an external surface section of the busbar rail (35) that enables a pressure equalization between an internal space of a motor housing (27) and the ECU chamber (30).

13. The electric coolant pump according to one of claims 1 to 12, wherein the ECU chamber (30) comprises an opening which is closed by a diaphragm (38) that is impervious to liquids and open to gas.

14. The electric coolant pump according to one of claims 1 to 13, furthermore comprising a metal seal (43) between the pump housing (1) and the heat-exchange cover (31).

15. The electric coolant pump according to one of claims 1 to 14, furthermore comprising a lip seal (42) between the pump housing (1) and the pump shaft (21).

16. The electric coolant pump according to one of claims 1 to 15, furthermore comprising an aluminum leakage seal (41) between the pump housing (1) and the electric motor (2).

17. The electric coolant pump according to one of claims 1 to 16, wherein a motor housing (27), by means of which the electric motor (2) is attached to the pump housing (1), is made of aluminum.

18. The electric coolant pump according to one of claims 1 to 17, wherein a leakage chamber (14) is formed between a face side of the electric motor (2) and an opposing outline of the spiral housing section (11) in the pump housing (1).

## Revendications

1. Pompe de liquide de refroidissement électrique, configurée pour un circuit de liquide de refroidissement d'un moteur à combustion interne, présentant :
un moteur électrique (2) ayant un arbre de pompe (21) ;
un rouet de pompe (20) accélérant radialement le liquide de refroidissement à transporter, qui est agencé sur l'arbre de pompe (21) et est entraîné par le moteur électrique (2) ;
un carter de pompe (1) ayant une chambre de pompe (10) dans laquelle l'arbre de pompe (20) s'étend en étant monté de manière rotative, et dans lequel le rouet de pompe (20) est reçu au sein d'une section de carter en spirale (11) qui entoure une circonférence radiale de la chambre de pompe (10) ;
une entrée de pompe (13) qui est orientée axialement par rapport au rouet de pompe (20) du côté du carter de pompe (1), qui fait face au moteur électrique (2), et débouche dans la chambre de pompe (10), ainsi qu'une sortie (12) qui est orientée tangentiellement au niveau d'une section périphérique de la section de carter en spirale (11) ;
un circuit de commande (3) qui est agencé autour de l'entrée (13) du côté du carter de pompe (1) qui fait face au moteur électrique (2) et logé dans une chambre d'ECU (30) ; dans laquelle
la chambre de pompe (10) est ouverte du côté du carter de pompe (1) qui fait face au moteur électrique (2), et la chambre d'ECU (30) est ouverte du côté assigné à la chambre de pompe (10) ;
**caractérisée en ce que**
le côté ouvert de la chambre de pompe (10) et le côté ouvert de la chambre d'ECU (30) sont séparés par un couvercle d'échange de chaleur (31) qui est ouvert au niveau d'une embouchure de l'entrée (13) dans la chambre de pompe (10), dans laquelle
un matériau dans lequel la chambre d'ECU (30) est conçue présente une conductivité thermique inférieure à celle d'un matériau dans lequel le couvercle d'échange de chaleur (31) et la section de carter en spirale (11) sont conçus.

2. Pompe de liquide de refroidissement électrique selon la revendication 1, dans laquelle le couvercle d'échange de chaleur (31) est constitué par de l'aluminium ou un alliage d'aluminium.

3. Pompe de liquide de refroidissement électrique selon la revendication 1 ou 2, dans laquelle la chambre d'ECU (30) est conçue en une pièce moulée en plastique.

4. Pompe de liquide de refroidissement électrique selon la revendication 1 ou 3, dans laquelle la section de carter en spirale (11) est constituée par de l'aluminium ou un alliage d'aluminium, qui est approprié d'un point de vue technique pour un procédé de coulée sous pression, un procédé de moulage par injection ou un procédé d'impression 3D.

5. Pompe de liquide de refroidissement électrique selon l'une quelconque des revendications 1 à 4, dans laquelle un côté non équipé d'un support de circuit (34) du circuit de commande (3) est en contact de surface avec le couvercle d'échange de chaleur (31).

6. Pompe de liquide de refroidissement électrique selon la revendication 5, dans laquelle le support de circuit (34) du circuit de commande (3) est une grille estampée.

7. Pompe de liquide de refroidissement électrique selon l'une quelconque des revendications 1 à 6, dans laquelle le circuit de commande (3) présente une carte de circuit imprimé (36), qui est de préférence maintenue espacée du support de circuit (34) dans la chambre d'ECU (30) au moyen de broches de contact (37) de connexion électrique.

8. Pompe de liquide de refroidissement électrique selon l'une quelconque des revendications 1 à 7, dans laquelle
le rouet de pompe (20) est conçu sous la forme d'une roue avec une ouverture d'écoulement centrale (22) et des ouvertures de sortie radiales (24), et présente des étages (23) sur une partie de panneau entre l'ouverture d'écoulement centrale (22) et les ouvertures de sortie radiales (24), qui sont orientés dans une direction radiale et une direction axiale ; et
le couvercle d'échange de chaleur (31) présente des saillies (32a) et des évidements (32b) alternant radialement, dans laquelle une saillie (32a) et un évidement adjacent (32b) sont respectivement associés radialement à un étage (23) du rouet de pompe (21) lui faisant face axialement, et des reliefs des saillies (32a) sont étagés de manière complémentaire aux étages associés (23), de sorte qu'un intervalle est formé entre les saillies (32a) et les étages (23) associés.

9. Pompe de liquide de refroidissement électrique selon l'une quelconque des revendications 1 à 8, dans laquelle le couvercle d'échange de chaleur (31) présente un collier (33) qui entoure l'entrée (13) et/ou qui forme l'embouchure de l'entrée (13).

10. Pompe de liquide de refroidissement électrique selon l'une quelconque des revendications 1 à 9, dans laquelle la chambre d'ECU (30) et l'entrée (13) sont conçues d'un seul tenant.

11. Pompe de liquide de refroidissement électrique selon l'une quelconque des revendications 1 à 10, présentant en outre une barre de bus (35), qui s'étend à travers un canal (15) dans le carter de pompe (1) et qui établit une connexion électrique entre le circuit de commande (3) et un stator (25) du moteur électrique (2).

12. Pompe de liquide de refroidissement électrique selon la revendication 11, dans laquelle un espace libre subsiste entre une section de surface interne du canal (15) et une section de surface externe de la barre de bus (35), qui permet une compensation de pression entre un espace interne d'un carter de moteur (27) et la chambre d'ECU (30).

13. Pompe de liquide de refroidissement électrique selon l'une quelconque des revendications 1 à 12, dans laquelle la chambre d'ECU (30) présente une ouverture, qui est fermée par une membrane (38) étanche aux liquides et ouverte aux gaz.

14. Pompe de liquide de refroidissement électrique selon l'une quelconque des revendications 1 à 13, présentant en outre un joint métallique (43) entre le carter de pompe (1) et le couvercle d'échange de chaleur (31).

15. Pompe de liquide de refroidissement électrique selon l'une quelconque des revendications 1 à 14, présentant en outre un joint à lèvre (42) entre le carter de pompe (1) et l'arbre de pompe (21).

16. Pompe de liquide de refroidissement électrique selon l'une quelconque des revendications 1 à 15, présentant en outre un joint étanche aux fuites en aluminium (41) entre le carter de pompe (1) et le moteur électrique (2).

17. Pompe de liquide de refroidissement électrique selon l'une quelconque des revendications 1 à 16, dans laquelle un carter de moteur (27), au moyen duquel le moteur électrique (2) est fixé au carter de pompe (1), est constitué par de l'aluminium.

18. Pompe de liquide de refroidissement électrique selon l'une des revendications 1 à 17, dans laquelle une chambre de fuite (14) est conçue entre un côté avant du moteur électrique (2) et un contour lui faisant face de la section de carter en spirale (11) dans le carter de pompe (1).
